# EUROPÄISCHE PATENTSCHRIFT

(11) **EP 3 116 678 B1**
(45) Veröffentlichungstag und Bekanntmachung des Hinweises auf die Patenterteilung: **19.08.2020**
(21) Anmeldenummer: 15705197.0
(22) Anmeldetag: 06.02.2015
(51) Int. Cl.: C23C 4/02, C23C 4/08, C23C 4/18, B32B 15/01, C22C 38/00, C22C 38/20, C23C 4/131, B23K 35/30, B23K 35/02, C22C 38/02, C22C 38/04

(54) **LICHTBOGENDRAHTGESPRITZE SCHICHT AUF DER LAUFBAHN EINES ZYLINDERKURBELGEHÄUSES AUS EINER ALUMINIUMLEGIERUNG**
ELECTRIC ARC WIRE SPRAY LAYER ON THE RACEWAY OF A CYLINDER CRANKCASE MADE OF AN ALUMINIUM ALLOY
COUCHE OBTENUE PAR PROJECTION À L'ARC ÉLECTRIQUE À PARTIR DE FIL SUR LA GLISSIÈRE D'UN CARTER-CYLINDRE EN ALLIAGE D'ALUMINIUM

(30) Priorität: 11.03.2014 DE 102014003114
(43) Veröffentlichungstag der Anmeldung: 18.01.2017
(73) Patentinhaber: Daimler AG, 70372 Stuttgart (DE)
(72) Erfinder: ALBAT, Rainer, 71384 Weinstadt (DE); BEHR, Thomas, 89275 Elchingen (DE); BÖHM, Jens, 73765 Neuhausen (DE); HAUG, Tilmann, 89264 Weissenhorn (DE); LAGEMANN, Volker, 89079 Ulm (DE); MICHEL, Manuel, 73765 Neuhausen a.d.F. (DE); SCHÄDEL, Tobias, 73630 Remshalden-Grunbach (DE); STRÖER, Martin, 88090 Immenstaad (DE)
(74) Vertreter: JENSEN & SON
(86) Internationale Anmeldenummer: PCT/EP2015/000252
(87) Internationale Veröffentlichungsnummer: WO 2015/135618

(56) Entgegenhaltungen:
- EP-A1- 0 816 527
- EP-A2- 1 967 601
- EP-A2- 2 664 684
- DE-A1-102010 053 327
- DE-U1-202009 001 002
- JP-A- 2011 231 386

## Beschreibung

Die Erfindung betrifft ein Verfahren zum Beschichten eines Substrats, bei dem ein drahtförmiger Spritzwerkstoff in einem Lichtbogen aufgeschmolzen und als Schicht auf dem Substrat abgeschieden wird sowie eine lichtbogendrahtgespritze Schicht auf einem Substrat.

Bei der Herstellung von Verbrennungsmotoren wird aus Gründen der Energieeffizienz und der Emissionsreduzierung eine möglichst geringe Reibung und eine hohe Abrieb- und Verschleißfestigkeit angestrebt. Hierzu werden Motorbauteile, wie zum Beispiel Zylinderbohrungen bzw. deren Wandungen mit einer Laufflächenschicht versehen oder es werden Laufbuchsen in die Zylinderbohrungen eingesetzt, welche mit einer Laufflächenschicht versehen werden. Das Aufbringen solcher Laufflächenschichten erfolgt zumeist mittels thermischen Spritzens, beispielsweise Lichtbogendrahtspritzen. Beim Lichtbogendrahtspritzen wird zwischen zwei drahtförmigen Spritzwerkstoffen ein Lichtbogen durch Anlegen einer Spannung erzeugt. Dabei schmelzen die Drahtspitzen ab und werden beispielsweise mittels eines Zerstäubergases auf die zu beschichtende Oberfläche, beispielsweise die Zylinderwand befördert, wo sie sich anlagern.

Aus der DE 102009061274 B3 ist ein drahtförmiger Spritzwerkstoff zum Lichtbogendrahtspritzen bekannt, umfassend im Wesentlichen Eisen, der sich dadurch auszeichnet, dass der Spritzwerkstoff zumindest mit Kohlenstoff als Mikrolegierung derart gebildet ist, dass beim Erstarren des Spritzwerkstoffs Bainit und Martensit entstehen. Im Spritzwerkstoff sind u. a. 0,1 Gew.% bis 0,28 Gew.% Kohlenstoff, 1,4 Gew.% bis 2,1 Gew.% Mangan sowie 0,05 Gew.% bis 0,3 Gew.% Silizium enthalten.

Ein Spritzdraht mit Legierungsbestandteilen ähnlich denen im Oberbegriff der Ansprüche 1 und 3 ist für die Herstellung von Zylinderlaufbahnen mit Motoren aus der JP 2011 231386 A bekannt.

Zum weiteren Stand der Technik kann ferner auf die DE 20 2009 001 002 U1, die DE 10 2010 053 327 A1 der Anmelderin sowie auf die EP 0 816 527 A1 verwiesen werden.

Es ist eine Aufgabe der Erfindung, ein verbessertes Verfahren zum Lichtbogendrahtspritzen anzugeben, mit dem eine Beschichtung mit guter Haftung, Festigkeit, Bearbeitbarkeit und Wärmeleitfähigkeit hergestellt werden kann.

Es ist eine weitere Aufgabe der Erfindung, eine verbesserte Spritzschicht anzugeben, welche sich durch Lichtbogendrahtspritzen auf einem Substrat auftragen und sich gut bearbeiten lässt und welche gute Haftung, Festigkeit und Wärmeleitfähigkeit besitzt.

Die Aufgabe wird erfindungsgemäß gelöst durch ein Verfahren zum Lichtbogendrahtspritzen mit den Merkmalen des Anspruchs 1 sowie eine lichtbogendrahtgespritze Schicht mit den Merkmalen des Anspruchs 2.

Die Verwendung einer Aluminiumlegierung als Substrat, auf dem die Beschichtung aufgebracht wird, ist besonders vorteilhaft für die Anwendung des erfindungsgemäßen Verfahrens bzw. der erfindungsgemäßen Schicht bei der Herstellung von Zylinderkurbelgehäusen von Verbrennungsmotoren, da somit einerseits erheblich leichtere Verbrennungsmotoren im Vergleich zu früher gebräuchlichen Gusseisenmotoren hergestellt werden können und andererseits Aluminiumlegierungen bessere Wärmeleitfähigkeiten aufweisen. Letzteres erlaubt eine schnellere Ableitung von Verbrennungswärme, wodurch das Risiko von Ölverkokungen deutlich reduziert werden kann. Allerdings ist die tribologische Belastbarkeit von Aluminiumlegierungen deutlich geringer als die von im Motorenbau üblicherweise verwendeten Eisen- oder Stahllegierungen. Deshalb wurden bislang üblicherweise Graugussbuchsen in Aluminiumkurbelgehäuse eingesteckt oder eingegossen um eine ausreichende tribologische Belastbarkeit sicher zu stellen. Diese Buchsen weisen eine Wandstärke von zumindest einigen Millimetern auf, in der eine deutlich geringere Wärmeleitfähigkeit vorliegt, und erreichen keine vollständige Anbindung an das Aluminiumsubstrat, wodurch der Wärmeübergang beeinträchtigt wird. Dadurch wird der Vorteil der Aluminiumlegierung hinsichtlich einer verbesserten Wärmeabfühung weitestgehend aufgehoben.

Bei thermisch vergleichsweise gering belasteten Benzinmotoren wurden deshalb die eingegossenen Buchsen auch schon durch Verschleißschutzschichten in Form von thermischen Spritzschichten ersetzt. Diese weisen ähnliche tribologische Belastbarkeit wie die Buchsen auf, haben aber Wandstärken, die nur noch im Bereich von 10 µm bis zu mehreren 100 µm liegen, und sie weisen eine wesentlich bessere Anbindung zum Substrat auf. Durch eine solche Schicht kann die Abführung der Verbrennungswärme hin zum gut wärmeleitenden Aluminiumsubstrat ohne große Beeinträchtigung erfolgen.

Bei deutlich stärker belasteten aufgeladenen Dieselmotoren sind die Anforderungen an die Verschleißschutzschichten und deren Herstellungsverfahren aber wesentlich höher. Einerseits muss mehr Wärme abgeführt werden, weshalb eine möglichst dünne Schicht angestrebt wird. Anderseits muss die Schicht der Reibungs- und Stoßbelastung durch den Kolben standhalten und darf insbesondere nicht vom Substrat abplatzen. Letzterem kann durch eine geeignete Aufrauung des Substrats begegnet werden, die vorrangig mittels eingebrachter Hinterschnitte, die durch das Spritzmaterial befüllt werden, eine gute mechanische Verklammerung zwischen der Verschleißschutzschicht und dem Substrat bewirkt. Dabei ist aber auf ein geeignetes Verhältnis zwischen der Gesamthöhe des Aufrauprofils und der Gesamtdicke der Spritzschicht zu achten, um die benötigte schnelle und gleichmäßige Wärmeabführung in das Substrat zu erzielen. Es hat sich als vorteilhaft gezeigt, dass eine gemittelte Rautiefe Rz im Bereich von 10 µm bis 150 µm und eine Schichtdicke von 30 µm bis 150 µm eine geeignete Parameterkombination darstellen, welche einerseits eine ausreichende Verklammerung und andererseits eine ausreichend schnelle und gleichmäßige Wärmeabführung bei ausreichender tribologischer Belastbarkeit ermöglichen. Dabei ist die Rautiefe definiert als die Summe aus der Höhe der größten Profilspitze und der Tiefe des größten Profiltals innerhalb einer Einzelmessstrecke. Die gemittelte Rautiefe Rz ergibt sich aus Mittelung der Ergebnisse von 5 Einzelmessstrecken. Die Schichtdicke wird von einer Bezugslinie entlang der größten Profilspitzen des Oberflächenprofils des Substrats bis zur Oberfläche der Spritzschicht bestimmt. Für die meisten Anwendungsfälle reicht eine maximale gemittelte Rautiefe Rz bis 100 µm, für viele sogar nur bis 50 µm. Das erfindungsgemäße Verfahren und die erfindungsgemäße Schicht erhöhen die Wärmeleitung in dem durch die beschichte Aluminiumlegierung substituierten Bereich der Zylinderwand gegenüber einer eingegossenen Graugussbuchse um den Faktor 4.

Bei dem erfindungsgemäßen Verfahren zur Herstellung der erfindungsgemäßen Schicht wird ein drahtförmiger Spritzwerkstoff zum Lichtbogendrahtspritzen verwendet, der im Wesentlichen Eisen umfasst, d.h. der Werkstoff besteht neben den explizit genannten Legierungsbestandteilen und unvermeidbaren Verunreinigungen aus einem Rest Eisen, welcher den größten Bestandteil der Legierung bildet.

Der Spritzwerkstoff ist vorzugsweise zumindest mit Kohlenstoff als Mikrolegierung derart gebildet, dass bereits beim Erstarren des Spritzwerkstoffs zumindest Perlit, Bainit und geringere Anteile Martensit entstehen, wobei zusätzlich Mikrolegierungselemente zur Bildung verschleißfester Phasen sowie zur Verbesserung der tribologischen Eigenschaften vorgesehen sein können. Dadurch lässt sich eine Verschleißschutzschicht mit vergleichsweise geringer Härte im Bereich von 250 bis 400 HV 0,1 erzeugen und aufbringen. Eine solche Schicht stellt einen geeigneten Kompromiss zwischen Bearbeitbarkeit der Schicht und deren erforderlichen tribologischen Eigenschaften dar. Letztere sind vorrangig ein geringer Verschleiß des nanokristallinen Gefüges bei gleichzeitig geringer Härte. Die geringe Härte ist insbesondere vorteilhaft gegenüber Stoßbeanspruchung wie sie z.B. eine Zylinderlaufbahn durch einen Kolben erfährt. Härtere Schichten platzen leichter (Eierschaleneffekt).

Die vorstehend genannten Mikrolegierungen sind solche Legierungen, die überwiegend aus einem Bestandteil gebildet sind, dem im Verhältnis zu einer Gesamtmasse nur geringe Mengen weiterer Bestandteile zugegeben sind. Feinstreifiger Perlit, bestehend aus hartem Fe₃C sowie Ferrit, ist eine tribologisch positiv wirksame Phase. Bainit ist eine Umwandlungsphase mittlerer Härte und Verschleißfestigkeit. Martensit ist ein hartes, verschleißfestes Gefüge. Die Bildung von Martensit, insbesondere der Anteil am und die Verteilung im Gesamtgefüge, kann durch die Art der Abkühlung des Spritzwerkstoffs und durch die Wahl der Legierungsbestandteile der Mikrolegierung gezielt beeinflusst werden. Eine bei einer Anlagerung einer mittels Lichtbogendrahtspritzen unter Verwendung des genannten Spritzwerkstoffs erzeugte Schicht auf einem Aluminiumsubstrat, beispielsweise einer Zylinderlauffläche, umfasst vorzugsweise Bainit, verschleißfeste Inseln aus Martensit sowie feinstreifigen Perlit.

Diese bevorzugten Eigenschaften können insbesondere erzielt werden, wenn folgende weitere Legierungsbestanteile im Spritzdraht vorhanden sind:
- Kupfer 0,05 Gew.% bis 0,25 Gew.% und/oder
- Chrom 0,001 Gew.% bis 0,1 Gew.% und/oder
- Titan 0,001 Gew.% bis 0,01 Gew.% und/oder
- Phosphor 0,001 Gew.% bis 0,02 Gew.% und/oder
- Schwefel 0,001 Gew.% bis 0,02 Gew.% und/oder
- Vanadin 0,0001 Gew.% bis 0,001 Gew.% und/oder
- Aluminium 0,001 Gew.% bis 0,02 Gew.% und/oder
- Bor 0,0001 Gew.% bis 0,0004 Gew.% und/oder
- Stickstoff 100 ppm. bis 200 ppm.
Die Mengenangaben sind in Gewichtsprozent jeweils bezogen auf ein Gesamtgewicht, falls keine anderen Angaben gemacht sind.

In der erfindungsgemäßen Ausgestaltung von Verfahren und Schicht weist das Aluminiumsubstrat zumindest abschnittsweise eine Dicke im Bereich von 2 bis 8 mm auf. Dies erlaubt zum Beispiel die Herstellung eines Zylinderkurbelgehäuses mit erstens einer ausreichenden Festigkeit und zweitens mit einer sehr schnellen Abführung von Verbrennungswäre an einen Wassermantel, der sich auf der nichtbeschichteten Seite des als Zylinderlaufbahn ausgestalteten Aluminiumsubstrats befindet.

Dabei finden das erfindungsgemäßen Verfahren und die erfindungsgemäße Schicht Verwendung zur Herstellung von Dieselmotoren mit einem Zylinderkurbelgehäuse aus einer Aluminiumlegierung mit einer thermisch beschichteten Zylinderlaufbahn und mit Stahlkolben. Aufgrund der unterschiedlichen Wärmeleitfähigkeiten von Stahl und Aluminium war eine solche Kombination bislang nur mit erheblichem konstruktions - und regelungstechnischen Aufwand möglich, bei dem z.B. erstens eine eingegossene Stahlbuchse in der Zylinderlaufbahn und zweitens eine aktive Kühlung des Kolbens mit Ölspritzen über die gesamte Betriebsdauer erforderlich waren. Infolge dessen war diese Lösung nach dem Stand der Technik auch energetisch ungünstig. Hingegen kann bei Verwendung des erfindungsgemäßen Verfahrens und der erfindungsgemäßen Schicht ein hochbelastbarer Dieselmotor mit hoher Leistungsdichte hergestellt werden, der Stahlkolben und ein Kurbelgehäuse aus einer Aluminiumlegierung mit thermisch beschichteter Laufbahn aufweist, ohne dass es im Betrieb zu den bekannten Verkokungen und den damit verbundenen Schädigungen von Öl, Kolben und Laufbahn kommt. Dadurch können die Verbrauchsvorteile der Kombination Stahlkolben-Aluminium-Kurbelgehäuse vollständig genutzt werden und gegenläufige Effekte wie eine energetisch ungünstige ständig aktive Kühlung über Ölspritzdüsen oder ähnliche Maßnahmen können vermieden oder zumindest begrenzt werden.

Im Folgenden wird die Erfindung anhand zweier Ausführungsbeispiele weiter erläutert:
Gemäß einem ersten Ausführungsbeispiel wird zunächst die Oberfläche eines zu beschichtenden Substrats aus einer Aluminiumlegierung derart mechanisch aufgeraut dass sich eine gemittelte Rautiefe RZ von circa 20 µm mit Hinterschnitten ausbildet. Danach wird der aufgeraute Bereich des Substrats mittels Lichtbogendrahtspritzen beschichtet, wobei ein drahtförmiger Spritzwerkstoff auf Eisenbasis verwendet wird, welcher als weitere Legierungsbestandteile enthält:
- Kohlenstoff 0,12 Gew.%
- Silizium 0,28 Gew.%
- Mangan 1,7 Gew.%
- Kupfer 0,18 Gew.%
- Chrom 0,027 Gew.%
- Stickstoff 150 ppm.
Die Mengenangaben sind in Gewichtsprozent jeweils bezogen auf ein Gesamtgewicht

Im Verlauf der Beschichtung mit dem Spritzwerkstoff werden die Täler und insbesondere auch die Hinterschnitte der aufgerauten Substratoberfläche mit dem Spritzwerkstoff aufgefüllt und so eine mechanische Verklammerung der Beschichtung mit dem Substrat bewirkt. Abschließend wird die beschichtete Oberfläche durch Honen geglättet und dabei bis auf eine verbleibende Dicke von circa 100 µm abgetragen.

Gemäß einem zweiten Ausführungsbeispiel wird als Substrat die Laufbahn eines Zylinderkurbelgehäuses aus einer Aluminiumlegierung in einem Dieselmotor verwendet und gemäß dem ersten Ausführungsbeispiel mit einer Verschleißschutzschicht beschichtet. Das Kurbelgehäuse besitzt zwischen der Verschleißschutzschicht und einem dahinter befindlichen Wassermantel eine Wandstärke von circa 5 mm. In dem Kurbelgehäuse sind Stahlkolben beweglich angeordnet.

Die im Betrieb des Dieselmotors anfallende Verbrennungswärme wird durch die Verschleißschutzschicht und die dahinter liegende Wand des Kurbelgehäuses an das im Wassermantel befindliche Wasser auch bei hoher Belastung des Motors ausreichend schnell abgeführt um das Risiko von Ölverkokungen und damit von einer Beschädigung des Kolbens und/oder der Laufbahn auch ohne den dauerhaften Einsatz einer aktiven Ölkühlung deutlich zu reduzieren. Gleichzeitig ist die Verschleißschutzschicht ausreichend dick und weich und durch die mechanische Verklammerung auch ausreichend fest mit der Laufbahnwand verbunden um den Betriebsbelastungen, insbesondere den Querkräften des Stahlkolbens, dauerhaft standhalten zu können.

Das erfindungsgemäße Verfahren und die erfindungsgemäße Schicht sind also aufgrund ihrer hervorragenden tribologischen Eigenschaften besonders geeignet für die Herstellung von hochbelasteten Dieselmotoren.

## Patentansprüche

1. Verfahren zum thermischen Beschichten eines Substrats das als Laufbahn eines
Zylinderkurbelgehäuses aus einer Aluminiumlegierung in einem ,
Dieselmotor ausgestaltet ist, wobei die Schicht als Wirkpartner zu einem Stahlkolben angeordnet ist,
bei welchem ein drahtförmiger Spritzwerkstoff auf Eisenbasis in einem Lichtbogen aufgeschmolzen und als Schicht auf dem Substrat aufgebracht wird,
wobei der verwendete Spritzwerkstoff aus folgenden Legierungsbestandteilen besteht:
- Kohlenstoff: 0,1 Gew.% bis 0,3 Gew.%
- Mangan: 1,5 Gew.% bis 2,0 Gew.%,
- Silizium: 0,25 Gew.% bis 0,4 Gew.%
und optional
- Kupfer: 0,05 Gew.% bis 0,25 Gew.% und/oder
- Chrom: 0,001 Gew.% bis 0,1 Gew.% und/oder
- Titan: 0,001 Gew.% bis 0,01 Gew.% und/oder
- Phosphor: 0,001 Gew.% bis 0,02 Gew.% und/oder
- Schwefel: 0,001 Gew.% bis 0,02 Gew.% und/oder
- Vanadin: 0,0001 Gew.% bis 0,001 Gew.% und/oder
- Aluminium: 0,001 Gew.% bis 0,02 Gew.% und/oder
- Bor: 0,0001 Gew.% bis 0,0004 Gew.% und/oder
- Stickstoff: 100 ppm bis 200 ppm,
- sowie den unvermeidbaren Verunreinigungen
jeweils bezogen auf ein Gesamtgewicht,
wobei,
- ein Substrat aus einer Aluminiumlegierung verwendet wird, wobei dessen Oberfläche vor der Beschichtung mechanisch aufgeraut wird, derart, dass sich eine Rauheit RZ mit Hinterschnitten ausbildet, welche im Verlauf der Beschichtung mit dem Spritzwerkstoff aufgefüllt werden und so eine mechanische Verklammerung der Beschichtung mit dem Substrat bewirken, und wobei
- die Beschichtung oberflächlich abgetragen wird,
wobei das Substrat senkrecht zur Hauptauftragsrichtung der Beschichtung zumindest abschnittsweise eine Dicke im Bereich von 2 bis 8 mm aufweist.

2. Lichtbogendrahtgespritzte Schicht auf Eisenbasis auf einem Substrat das als Laufbahn eines
Zylinderkurbelgehäuses aus einer Aluminiumlegierung in einem Dieselmotor ausgestaltet ist, wobei die Schicht als Wirkpartner zu einem Stahlkolben angeordnet ist,
wobei diese Schicht aus folgenden Legierungsbestandteilen besteht:
- Kohlenstoff: 0,1 Gew.% bis 0,3 Gew.%,
- Mangan: 1,5 Gew.% bis 2,0 Gew.%,
- Silizium: 0,25 Gew.% bis 0,4 Gew.%,
und optional - Kupfer: 0,05 Gew.% bis 0,25 Gew.% und/oder
- Chrom: 0,001 Gew.% bis 0,1 Gew.% und/oder
- Titan: 0,001 Gew.% bis 0,01 Gew.% und/oder
- Phosphor: 0,001 Gew.% bis 0,02 Gew.% und/oder
- Schwefel: 0,001 Gew.% bis 0,02 Gew.% und/oder
- Vanadin: 0,0001 Gew.% bis 0,001 Gew.% und/oder
- Aluminium: 0,001 Gew.% bis 0,02 Gew.% und/oder
- Bor: 0,0001 Gew.% bis 0,0004 Gew.% und/oder
- Stickstoff: 100 ppm bis 200 ppm,
- sowie den unvermeidbaren Verunreinigungen
jeweils bezogen auf ein Gesamtgewicht,
wobei,
- das Substrat aus einer Aluminiumlegierung besteht, wobei dessen Oberfläche eine Rauheit RZ mit Hinterschnitten aufweist, welche mit dem Material der Spritzschicht aufgefüllt sind und so eine mechanische Verklammerung der Spritzschicht mit dem Substrat bewirken, und wobei
- die Beschichtung oberflächlich abgetragen ist **dadurch gekennzeichnet, dass** das Substrat senkrecht zur Hauptauftragsrichtung der Beschichtung zumindest abschnittsweise eine Dicke im Bereich von 2 bis 8 mm aufweist.

## Claims

1. Method for thermally coating a substrate designed as a track of an aluminium alloy cylinder crankcase in a diesel engine, wherein the coating layer is arranged as an active partner to a steel piston, in which method an iron-based, wire-type spraying material is fused in an arc and deposited as a layer on the substrate, wherein the spraying material used consists of the following alloying constituents:
- carbon: 0.1 % w/w to 0.3 % w/w
- manganese: 1.5 % w/w to 2.0 % w/w
- silicon:0.25 % w/w to 0.4 % w/w, and optionally
- copper: 0.05 % w/w to 0.25 % w/w and/or
- chromium: 0.001 % w/w to 0.1 % w/w and/or
- titanium: 0.001 % w/w to 0.01 % w/w and/or
- phosphorus: 0.001% w/w to 0.02 % w/w and/or
- sulphur: 0.001 % w/w to 0.02 % w/w and/or
- vanadium: 0.0001 % w/w to 0.001 % w/w and/or
- aluminium: 0.001 % w/w to 0.02 % w/w and/or
- boron: 0.0001 % w/w to 0.0004 % w/w and/or
- nitrogen: 100 ppm to 200 ppm
- plus unavoidable impurities - in each case relating to an overall weight, wherein
- a substrate of an aluminium alloy is used, wherein prior to the coating process the surface thereof is mechanically roughened in such a way that an RZ roughness with undercuts is formed, which are filled with the spraying material in the coating process, thus effecting a mechanical interlock between the coating and the substrate, and wherein
- the coating is superficially removed,
- wherein at least sections of the substrate perpendicular to the main application direction of the coating have a thickness in the range of 2 mm to 8 mm.

2. Arc wire-sprayed iron-based coating on a substrate designed as a track of an aluminium alloy cylinder crankcase in a diesel engine, wherein the coating layer is arranged as an active partner to a steel piston, wherein said coating layer consists of the following alloying constituents:
- carbon: 0.1 % w/w to 0.3 % w/w
- manganese: 1.5 % w/w to 2.0 % w/w
- silicon:0.25 % w/w to 0.4 % w/w, and optionally
- copper: 0.05 % w/w to 0.25 % w/w and/or
- chromium: 0.001 % w/w to 0.1 % w/w and/or
- titanium: 0.001 % w/w to 0.01 % w/w and/or
- phosphorus: 0.001% w/w to 0.02 % w/w and/or
- sulphur: 0.001 % w/w to 0.02 % w/w and/or
- vanadium: 0.0001 % w/w to 0.001 % w/w and/or
- aluminium: 0.001 % w/w to 0.02 % w/w and/or
- boron: 0.0001 % w/w to 0.0004 % w/w and/or
- nitrogen: 100 ppm to 200 ppm
- plus unavoidable impurities - in each case relating to an overall weight, wherein
- the substrate consists of an aluminium alloy, wherein the surface thereof has an RZ roughness with undercuts filled with the material of the sprayed layer and thus effecting a mechanical interlock between the sprayed layer and the substrate, and wherein
- the coating is superficially removed, **characterised in that** at least sections of the substrate perpendicular to the main application direction of the coating have a thickness in the range of 2 mm to 8 mm.

## Revendications

1. Procédé de revêtement thermique d'un substrat qui est conçu sous la forme d'un chemin de roulement d'un carter de vilebrequin en alliage d'aluminium dans un moteur diesel, la couche étant disposée sous forme de partenaire coopérant avec le piston en acier, une matière de projection sous forme de fil à base de fer étant fondue dans un arc électrique et appliquée sous la forme de couche sur le substrat,
la matière de projection utilisée étant constituée des éléments d'alliage suivants :
- carbone : entre 0,1 % en poids et 0,3 % en poids
- manganèse: entre 1,5 en poids et 2,0 % en poids,
- silicium : entre 0,25 % en poids et 0,4 % en poids
et éventuellement
- cuivre : entre 0,05 % en poids et 0,25 % en poids et/ou
- chrome : entre 0,001 % en poids et 0,1 en poids et/ou
- titane : 0,001 % en poids et 0,01 en poids et/ou
- phosphore: entre 0,001 % en poids et 0,02 en poids et/ou f
- soufre: entre 0,001 % en poids et 0,02 Gew.% en poids et/ou
- vanadium: entre 0,0001 % en poids et 0,001 en poids et/ou
- aluminium: entre 0,001 % en poids et 0,02 en poids et/ou
- bore: entre 0,0001 % en poids et 0,0004 en poids et/ou
- azote: entre 100 ppm et 200 ppm,
- ainsi que des impuretés inévitables respectivement rapporté au poids total,
- un substrat en alliage d'aluminium étant utilisé, sa surface avant le revêtement étant rendu rugueux mécaniquement, de sorte à former une rugosité RZ avec les contre-dépouilles, qui au cours du revêtement sont remplies d'un matériau de projection et ainsi un cramponnage mécanique du revêtement peut opérer avec le substrat, et
- le revêtement étant retiré superficiellement,
le substrat présentant perpendiculairement à la direction d'application principale du revêtement au moins à certains endroits une épaisseur comprise dans la plage allant de 2 à 8 mm.

2. Couche projetée au fil à arc électrique à base de fer sur un substrat est conçu sous la forme d'un chemin de roulement d'un carter de vilebrequin en alliage d'aluminium dans un moteur diesel, la couche étant disposée sous forme de partenaire coopérant avec le piston en acier,
ladite couche étant constituée des éléments d'alliage suivants :
- carbone: entre 0,1 % en poids et 0,3 % en poids
- manganèse: entre 1,5 % en poids et 2,0 Gew.%,
- silicium: entre 0,25 % en poids et 0,4 Gew.%, PH
et éventuellement cuivre : entre 0,05 Gew.% % en poids et 0,25 % en poids et/ou
- chrome: entre 0,001 % en poids et 0,1 % en poids et/ou
- titane: entre 0,001 % en poids et 0,01 % en poids et/ou
- phosphore: entre 0,001 % en poids et 0,02 % en poids et/ou
- soufre: entre 0,001 % en poids et 0,02 % % en poids et/ou
- vanadium: entre 0,0001 % en poids et 0,001 % en poids et/ou
- aluminium: entre 0,001 % en poids et 0,02 % en poids et/ou
- bore: entre 0,0001 % en poids et 0,0004 % en poids et/ou
- azote: entre 100 ppm et 200 ppm,
- ainsi que des impuretés inévitables respectivement rapporté à un poids total, le substrat étant constitué d'un alliage d'aluminium, sa surface présentant une rugosité RZ avec des contre-dépouilles qui au cours du revêtement sont remplies d'un matériau de projection et ainsi un cramponnage mécanique du revêtement peut opérer avec le substrat, et
- le revêtement étant retiré superficiellement,
le substrat présentant perpendiculairement à la direction d'application principale du revêtement au moins à certains endroits une épaisseur comprise dans la plage allant de 2 à 8 mm.
